# EUROPEAN PATENT APPLICATION

(11) **EP 4 266 434 A1**
(43) Date of publication of application: **25.10.2023**
(21) Application number: 22746169.6
(22) Date of filing: 21.01.2022
(51) Int. Cl.: H01M 8/04119, B01D 63/02

(54) **FUEL CELL MEMBRANE HUMIDIFIER**

(30) Priority: 28.01.2021 KR 20210012279
(71) Applicant: Kolon Industries, Inc., Seoul 07793 (KR)
(72) Inventor: YANG, Hyoung Mo, Seoul 07793 (KR); KIM, Kyoung Ju, Seoul 07793 (KR); AHN, Woong Jeon, Seoul 07793 (KR); KIM, In Ho, Seoul 07793 (KR)
(74) Representative: Ter Meer Steinmeister & Partner
(86) International application number: PCT/KR2022/001153
(87) International publication number: WO 2022/164142

(57) **Abstract**

The present invention relates to a fuel cell membrane humidifier which can prevent gas leakage due to repetition of driving and stopping of a fuel cell, can be manufactured with relatively low manufacturing costs and high productivity, and can suppress vibrations generated during operation. A fuel cell membrane humidifier according to an embodiment of the present invention comprises: a humidification module for humidifying air supplied from the outside with moisture in exhaust gas discharged from a fuel cell stack; and caps respectively coupled to both ends of the humidification module. The humidification module comprises: a mid-case which has both ends opened and a step difference formed on the inner circumferential surface thereof; at least one cartridge which is disposed within the mid-case and accommodates a plurality of hollow fiber membranes; a fixed layer in which ends of the hollow fiber membranes are potted and supported by the inner wall of the mid-case; a bracket which is supported by the step difference of the mid-case and is in contact with the fixed layer; and a packing member which has a groove into which an end of the mid-case is fitted and is in contact with the bracket. In addition, the humidification module has a damping protrusion which is formed on the inner wall of the mid-case and fitted into the fixed layer to suppress vibration generated in the cartridge by air flowing inside the humidification module.

## Description

### [Technical Field]

The present invention relates to a fuel cell membrane humidifier, and more specifically, to a fuel cell membrane humidifier capable of preventing gas leakage due to repeated operation and stop of a fuel cell, being manufactured with a relatively low manufacturing cost and high productivity, and suppressing a vibration generated at the time of an operation.

### [Background art]

Fuel cells are power generation cells that produce electricity through coupling between hydrogen and oxygen. The fuel cells have an advantage of being able to continuously produce electricity as long as the hydrogen and the oxygen are supplied, and having an efficiency that is about twice higher than an internal combustion engine because of no heat loss, unlike general chemical cells such as dry batteries or storage batteries.

Further, since chemical energy generated through coupling between the hydrogen and the oxygen is directly converted into electrical energy, emission of pollutants is reduced. Therefore, the fuel cells have an advantage of being environmentally friendly and being able to reduce concerns about resource depletion due to increased energy consumption.

These fuel cells are roughly classified into, for example, a polymer electrolyte membrane fuel cell (PEMFC), a phosphoric acid fuel cell (PAFC), a molten carbonate fuel cell (MCFC), a solid oxide fuel cell (SOFC), and an alkaline fuel cell (AFC) depending on a type of electrolyte used.

These fuel cells fundamentally operate according to the same principle, but have a difference in a type of fuel used, an operating temperature, a catalyst, an electrolyte, or the like. Among the cells, the polymer electrolyte membrane fuel cell (PEMFC) is known to be the most promising not only for small-scale stationary power generation equipment but also for transportation systems because the polymer electrolyte membrane fuel cell operates at a lower temperature than other fuel cells and can be miniaturized due to a high output density.

One of the most important factors in improving the performance of the polymer electrolyte membrane fuel cell (PEMFC) is to maintain moisture content by supplying a certain amount or more of moisture to a polymer electrolyte membrane (or proton exchange membrane: PEM) of a membrane electrode assembly (MEA). This is because the efficiency of power generation is rapidly degraded when the polymer electrolyte membrane is dried.

Examples of a method for humidifying the polymer electrolyte membrane include 1) a bubbler humidification scheme for filling a pressure-resistant container with water and then passing a target gas through a diffuser to supply moisture, 2) a direct injection scheme for calculating a moisture supply amount required for a fuel cell reaction and directly supplying moisture to a gas flow pipe through a solenoid valve, and 3) a humidification membrane scheme for supplying moisture to a fluidized gas layer using a polymer separation membrane.

Among these, the membrane humidification scheme for humidifying a polymer electrolyte membrane by providing water vapor to air supplied to the polymer electrolyte membrane using a membrane that selectively permeates only water vapor contained in an off-gas is advantageous in that a weight and size of a humidifier can be reduced.

A selective permeable membrane used in the membrane humidification scheme is preferably a hollow fiber membrane having a large permeable area per unit volume when a module is formed. That is, when a humidifier is manufactured using hollow fiber membranes, there are advantages that high integration of the hollow fiber membranes with a large contact surface area is possible so that a fuel cell can be sufficiently humidified even with a small capacity, low-cost materials can be used, and moisture and heat contained in an off-gas discharged with a high temperature from the fuel cell can be recovered and can be reused through the humidifier.

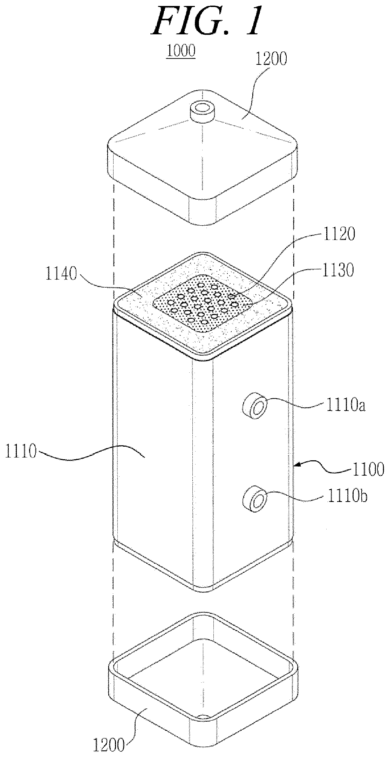

As illustrated in FIG. 1, a typical membrane humidification type of humidifier 1000 includes a humidification module 1100 in which moisture exchange between air supplied from the outside and an off-gas discharged from a fuel cell stack (not illustrated) occurs, and caps 1200 coupled to both ends of the humidification module 1100.

One of the caps 1200 transfers the air supplied from the outside to the humidification module 1100, and the other transfers the air humidified by the humidification module 1100 to the fuel cell stack.

The humidification module 1100 includes a mid-case 1110 having an off-gas inlet 1110a and an off-gas outlet 1110b, and a plurality of hollow fiber membranes 1120 inside the mid-case 1110. Both ends of a bundle of hollow fiber membranes 1120 are potted in a fixing layer 1130. The fixing layer 1130 are generally formed by curing a liquid polymer such as a liquid polyurethane resin through a casting scheme (for example, dip casting or centrifugal casting).

The air supplied from the outside flows along hollows of the hollow fiber membranes 1120. The off-gas flowing into the mid-case 1110 through the off-gas inlet 1110a comes into contact with outer surfaces of the hollow fiber membranes 1120, and then, is discharged from the mid-case 1110 through the off-gas outlet 1110b. When the off-gas comes into contact with the outer surfaces of the hollow fiber membranes 1120, moisture contained in the off-gas permeates the hollow fiber membranes 1120 to humidify air flowing along the hollows of the hollow fiber membranes 1120.

The inner spaces of the caps 1200 are in fluid communication only with hollows of the hollow fiber membranes 1120, and should be completely blocked from the inner space of the mid-case 1110. Otherwise, gas leakage occurs due to a pressure difference, and power generation efficiency of the fuel cell is degraded.

In general, a resin layer 1140 between the fixing layer 1130 and the mid-case 1110 blocks the inner spaces of the caps 1200 from the inner space of the mid-case 1110 together with the fixing layer 1130, as illustrated in FIG. 1. The resin layer 1140 is generally formed by curing a liquid polymer such as liquid polyurethane resin through a casting scheme (deep casting or centrifugal casting), similar to the fixing layer 1130.

However, (i) expansion and contraction of the resin layer 1140 alternately occur as operation and stop of the fuel cell are repeated, and the resin layer 1140 is separated from the mid-case 1110 due to a difference in thermal expansion coefficient between the mid-case 1110 and the resin layer 1140, which causes a gap therebetween, or (ii) a gap is highly likely to be caused between the resin layer 1140 and the mid-case 1110 due to a vibration and/or shock. The gap between the resin layer 1140 and the mid-case 1110 causes gas leakage, which degrades the power generation efficiency of the fuel cell.

In order to prevent the gas leakage due to the gap between the resin layer 1140 and the mid-case 1110, Korean Patent No. 1697998 discloses a method of applying a sealant (liquid sealing material) to a groove formed by a step on a side surface of the resin layer 1140 and an inner surface of the mid-case 1110, fitting a packing member (solid sealing material) into the groove, and then, curing the sealant.

However, this method has problems of low productivity and a high manufacturing cost in that (i) workability is poor since the sealant should be accurately applied to the groove, (ii) it takes a very long time of 24 hours or more to cure the sealant, and (iii) a separate space for storing the humidification module 1100 until the sealant is cured is required.

### [Disclosure]

### [Technical Problem]

An object of the present invention is to provide a fuel cell membrane humidifier capable of preventing problems caused by limitations and disadvantages of related arts as described above, reliably preventing gas leakage due to repeated operation and stop of a fuel cell, being manufactured with a relatively low manufacturing cost and high productivity, and suppressing a vibration generated at the time of an operation.

Other characteristics and advantages of the present invention, in addition to the aspects of the present invention described above, will be described hereinafter or will be clearly understood by those skilled in the art from such description.

### [Technical Solution]

The fuel cell membrane humidifier according to the embodiment of the present invention includes
a humidification module configured to humidify air supplied from the outside with moisture in an off-gas discharged from a fuel cell stack; and caps coupled to both ends of the humidification module, respectively, wherein the humidification module includes a mid-case having both open ends and a step formed on an inner circumferential surface; at least one cartridge disposed inside the mid-case and configured to accommodate a plurality of hollow fiber membranes; a fixing layer having ends of the hollow fiber membranes potted therein, and supported by an inner wall of the mid-case; a bracket supported by the step of the mid-case and being in contact with the fixing layer; and a packing member including a groove having the end of the mid-case fitted thereinto and being in contact with the bracket, and a damping protrusion fitted into the fixing layer to suppress a vibration generated in the cartridge using air flowing inside the humidification module is formed on the inner wall of the mid-case.

In the fuel cell membrane humidifier according to the embodiment of the present invention, each of the bracket and the packing member may have a single closed curve shape corresponding to a cross-sectional form of the mid-case.

In the fuel cell membrane humidifier according to the embodiment of the present invention, the bracket may have a higher hardness than the packing member.

In the fuel cell membrane humidifier according to the embodiment of the present invention, the bracket may have a hardness of 60 to 100 Shore A, and the packing member may have a hardness of 40 to 50 Shore A.

In the fuel cell membrane humidifier according to the embodiment of the present invention, the packing member may include soft rubber, and the bracket may include metal, hard plastic, or hard rubber.

In the fuel cell membrane humidifier according to the embodiment of the present invention, the packing member may include silicone rubber or urethane rubber, and the bracket may include polypropylene (PP), polyethylene terephthalate (PET), polystyrene (PS), polycarbonate (PC), or acrylic resin.

In the fuel cell membrane humidifier according to the embodiment of the present invention, the packing member may also be in contact with the fixing layer.

In the fuel cell membrane humidifier according to the embodiment of the present invention, the fixing layer may include a first fixing layer having the ends of the hollow fiber membranes potted therein; and a second fixing layer surrounding the first fixing layer and being in contact with the bracket.

In the fuel cell membrane humidifier according to the embodiment of the present invention, the first fixing layer and the second fixing layer may be formed of the same material.

In the fuel cell membrane humidifier according to the embodiment of the present invention, both the first fixing layer and the second fixing layer may include a polyurethane (PU) resin.

In the fuel cell membrane humidifier according to the embodiment of the present invention, the humidification module nay further include an inner case having both open ends in the mid-case, and the hollow fiber membranes may be disposed in the inner case.

In the fuel cell membrane humidifier according to the embodiment of the present invention, an end of the inner case may be potted in the first fixing layer.

Further, the fuel cell membrane humidifier according to the embodiment of the present invention includes
a humidification module configured to humidify air supplied from the outside with moisture in an off-gas discharged from a fuel cell stack; and caps coupled to both ends of the humidification module, wherein the humidification module includes a mid-case having both open ends and a step formed on an inner circumferential surface; at least one cartridge disposed inside the mid-case and configured to accommodate a plurality of hollow fiber membranes; a fixing layer having ends of the hollow fiber membranes potted therein, and supported by an inner wall of the mid-case; a bracket supported by the step of the mid-case and being in contact with the fixing layer; and a packing member including a groove having the end of the mid-case fitted thereinto and being in contact with the bracket, and a damping protrusion fitted into the fixing layer to suppress a vibration generated in the cartridge using air flowing inside the humidification module is formed on the inner wall of the mid-case, the hollow fiber membranes include a first group of hollow fiber membranes and a second group of hollow fiber membranes, the humidification module includes a first inner case having the first group of hollow fiber membranes disposed therein; and a second inner case having the second group of hollow fiber membranes disposed therein, and the fixing layer includes a first fixing layer having ends of the first group of hollow fiber membranes potted therein; a second fixing layer having ends of the second group of hollow fiber membranes potted therein; and a third fixing layer surrounding the first and second fixing layers and being in contact with the bracket.

In the fuel cell membrane humidifier according to the embodiment of the present invention, an end of the first inner case may be potted in the first fixing layer, and an end of the second inner case may be potted in the second fixing layer.

Other specific matters of implementation examples according to various aspects of the present invention are included in the detailed description below.

### [Advantageous Effects]

According to the present invention, since a sealant applying process and a sealant curing process required in the related art are omitted, not only workability is improved, but also productivity can be dramatically improved due to a shortened manufacturing time.

Further, since a separate space for storing a semi-finished product is not required for the sealant curing process, a humidifier production cost can be reduced.

Further, it is possible to prevent gas leakage due to repeated operation and stop of the fuel cell, and to realize manufacturing with a relatively low manufacturing cost and high productivity.

Further, since the damping protrusion is formed between the mid-case and the fixing layer, it is possible to suppress a vibration generated at the time of an operation, to suppress a flow of air inside the mid-case to the cap to enhance a sealing function, and to facilitate positioning of the fixing layer at the time of forming the fixing layer.

### [Description of Drawings]

FIG. 1 is an exploded perspective view illustrating a fuel cell membrane humidifier according to the related art.
FIG. 2 is a cross-sectional view illustrating a fuel cell membrane humidifier according to a first embodiment of the present invention.
FIG. 3A is a perspective view of a bracket according to the first embodiment of the present invention.
FIG. 3B is a cross-sectional view taken along line A-A of FIG. 3A.
FIG. 4A is a perspective view of a packing member according to the first embodiment of the present invention.
FIG. 4B is a cross-sectional view taken along line A-A of FIG. 4A.
FIG. 5 is a cross-sectional view illustrating a fuel cell membrane humidifier according to a second embodiment of the present invention.
FIGS. 6A to 6G are cross-sectional views illustrating a method of manufacturing the fuel cell membrane humidifier according to the embodiment of the present invention.

### [Mode for Disclosure]

Since various changes may be made to the present invention, which may have several embodiments, specific embodiments will be illustrated and described in detail herein. However, it will be understood that this is not intended to limit the present invention to the specific embodiments, and all changes, equivalents, or substitutions included in the spirit and scope of the present invention are included.

The terms used herein are used for the purpose of describing specific embodiments only and are not intended to limit the present invention. The singular expressions "a," "an" and "the" include the plural expressions, unless the context clearly indicates otherwise. It will be understood that the terms "include" or "have" herein specify the presence of features, numbers, steps, operations, components, parts or combinations thereof described herein, but do not preclude the presence or addition of one or more other features, numbers, steps, operations, components, parts or combinations thereof. Hereinafter, a fuel cell membrane humidifier according to embodiments of the present invention will be described with reference to the drawings.

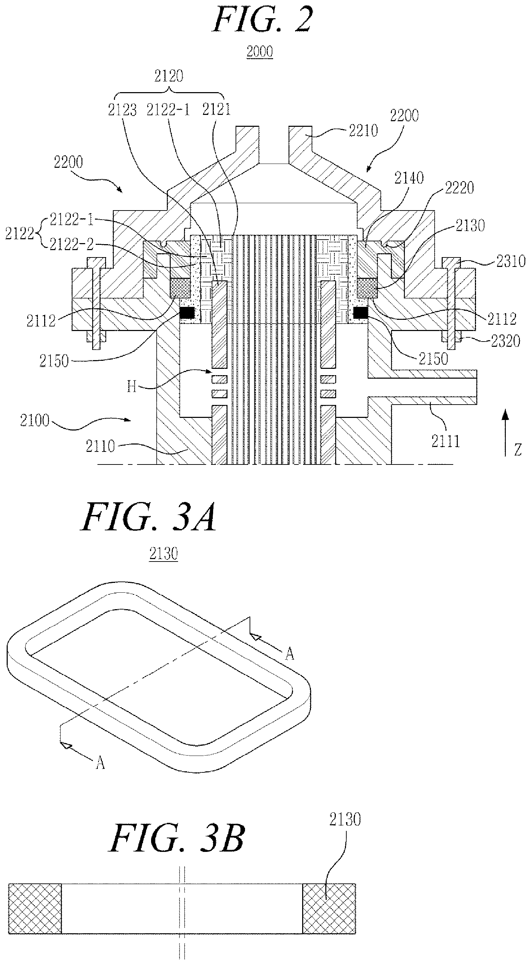

Cross-sectional views of FIGS. 2 and 5 to 6g are cross-sectional views of one end of the humidifier or a semi-finished product thereof, and the other end also has substantially the same (or symmetrical) cross-section.

As illustrated in FIG. 2, the fuel cell membrane humidifier 2000 of the present invention includes a humidification module 2100 that humidifies air supplied from the outside with moisture in an off-gas discharged from a fuel cell stack. Both ends of the humidification module 2100 are fastened to caps 2200, respectively.

One of the caps 2200 receives the air supplied from the outside through a port 2210 and transfers the air to the humidification module 2100, and the other cap transfers the air humidified by the humidification module 2100 to the fuel cell stack through the port 2210. The caps 2200 may be formed of hard plastic (for example, polycarbonate, polyamide (PA) or polyphthalamide (PPA)) or a metal, and may have a cross section having a simple closed curve shape (for example, a circular or polygonal shape).

The humidification module 2100 according to the embodiment of the present invention is a device in which moisture exchange occurs between the air supplied from the outside and an off-gas supplied from the fuel cell stack, and includes a mid-case 2110 having both open ends and a step 2112 on an inner circumferential surface, a plurality of hollow fiber membranes 2121 in the mid-case 2110, a fixing layer 2122 in which ends of the hollow fiber membranes 2121 are potted, a bracket 2130 that is supported by the step 2112 of the mid-case 2110 and comes into contact with the fixing layer 2122, and a packing member 2140 that has a groove into which the end of the mid-case 2110 is fitted and comes into contact the bracket 2130.

The mid-case 2110 includes ports 2111 (only one is illustrated in FIG. 2) for a flow of an off-gas into or from the inside. The mid-case 2110 may be formed of a rigid plastic (for example, polycarbonate, polyamide (PA), or polyphthalamide (PPA)) or a metal, and may have a cross section having a single closed curve shape (for example, a circular or polygonal shape). According to the embodiment of the present invention, the mid-case 2110 may have the same cross section as the cap 2200.

The hollow fiber membranes 2121 may include a polysulfone resin, a polyethersulfone resin, a sulfonated polysulfone resin, a polyvinylidene fluoride (PVDF) resin, a polyacrylonitrile (PAN) resin, a polyimide resin, a polyamideimide resin, a polyesterimide resin, or a mixture of two or more of these. Air supplied from the outside through one of the caps 2200 is humidified while flowing along hollows of the hollow fiber membranes 2121, and then is transferred to the fuel cell stack through the other cap 2200.

The off-gas flowing into the mid-case 2110 comes into contact with outer surfaces of the hollow fiber membranes 2121 and then is discharged from the mid-case 2110. When the off-gas comes into contact with the outer surfaces of the hollow fiber membranes 2121, moisture contained in the off-gas permeates the hollow fiber membranes 2121 to humidify the air flowing along the hollows of the hollow fiber membranes 2121.

The fixing layer 2122, which may be formed of a hard or soft polyurethane resin, should block inner spaces of the caps 2200 from the inner space of the mid-case 2110 so that the caps 2200 can be in fluid communication only with the hollow fiber membranes 2121.

However, as described above, (i) expansion and contraction of the fixing layer 2122 alternately occur as operation and stop of the fuel cell are repeated, and the fixing layer 2122 is separated from the mid-case 2110 due to a difference in thermal expansion coefficient between the mid-case 2110 and the fixing layer 2122, which causes a gap therebetween, or (ii) a gap is highly likely to be caused between the fixing layer 2122 and the mid-case 2110 due to a vibration and/or shock. The gap between the fixing layer 2122 and the mid-case 2110 causes gas leakage, which degrades the power generation efficiency of the fuel cell.

Gas leakage that may be caused by the gap between the fixing layer 2122 and the mid-case 2110 includes (i) external leakage in which an off-gas in the inner space of the mid-case 2110 sequentially passes through the gap between the fixing layer 2122 and the mid-case 2110 and a gap between the cap 2200 and the mid-case 2110 and exists the humidifier 2000, and (ii) internal leakage in which the off-gas in the inner space of the mid-case 2110 sequentially passes through the gap between the fixing layer 2122 and the mid-case 2110 and a gap between the fixing layer 2122 and the cap 2200 and enters the inner space of the cap 2200.

In order to prevent the gas leakage due to the gap between the fixing layer 2122 and the mid-case 2110, the fuel cell membrane humidifier 2000 of the present invention further includes the bracket 2130, the packing member 2140, and a damping protrusion 2150.

As illustrated in FIGS. 3A and 3B, the bracket 2130 supported by the step 2112 of the mid-case 2110 may have a single closed curve shape corresponding to a cross-sectional shape of the mid-case 2110.

According to the embodiment of the present invention, the bracket 2130 has a higher hardness than the packing member 2140 and is strongly adhered to the fixing layer 2122.

For example, the packing member 2140 may have a relatively low hardness of 30 to 60 Shore A and, more preferably, 40 to 50 Shore A so that the packing member 2140 can be compressed by a pressure that is applied when the cap 2200 is fastened to the mid-case 2110 through bolts 2310 and nuts 2320, and the bracket 2130 may have a hardness of 60 to 100 Shore A and, more preferably, 70 to 100 Shore A, which is higher than the hardness of the packing member 2140.

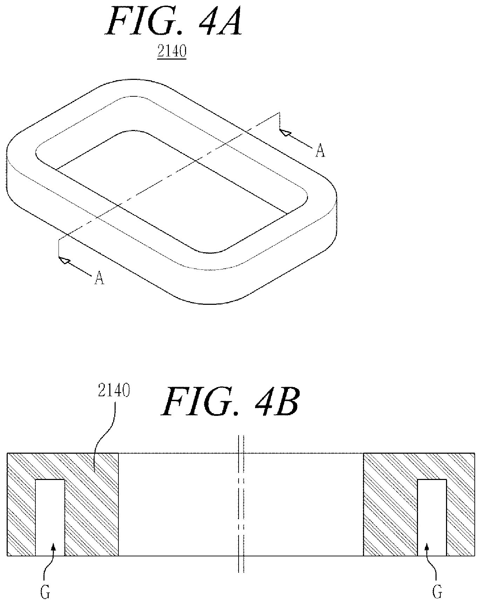

As illustrated in FIGS. 4A and 4B, the packing member 2140 having a groove G into which an end of the mid-case 2110 is fitted may also have a single closed curve shape corresponding to the cross-sectional shape of the mid-case 2110.

According to the embodiment of the present invention, the packing member 2140 may include soft rubber (for example, silicone rubber or urethane rubber), and the bracket 2130 may include a metal, hard plastic (for example, polypropylene (PP), polyethylene terephthalate (PET), polystyrene (PS), polycarbonate (PC), or acrylic resin), or hard rubber.

When the cap 2200 is fastened to the mid-case 2110 through the bolts 2310 and the nuts 2320, a portion of the packing member 2140 disposed between the cap 2200 and the mid-case 2110 (particularly, a portion of the packing member 2140 corresponding to the groove into which the end of the mid-case 2110 is fitted) is compressed by pressure applied by the cap 2200 and the mid-case 2110, so that a movement (that is, the external leakage) of a gas through an interface between the packing member 2140 and the mid-case 2110 can be prevented and external tight sealing can be ensured.

Further, since the bracket 2130 is supported by the step 2112 of the mid-case 2110 and has a relatively high hardness, the bracket 2130 can effectively apply pressure to the packing member 2140 together with the cap 2200 when the cap 2200 is fastened to the mid-case 2110 through the bolts 2310 and the nuts 2320. As a result, a portion of the packing member 2140 disposed between the cap 2200 and the bracket 2130 (that is, located inside the mid-case 2110) is sufficiently compressed so that a movement (that is, the internal leakage) of the gas through an interface between the packing member 2140 and the bracket 2130 can be prevented and excellent internal sealing can be ensured.

Further, the bracket 2130 according to the embodiment of the present invention has an excellent adhesion to the fixing layer 2122 so that a movement (that is, the internal leakage) of the gas through an interface between the bracket 2130 and the fixing layer 2122 can be prevented and more excellent internal sealing can be provided. A surface of the bracket 2130 is treated with a primer if necessary, so that an adhesive strength between the bracket 2130 and the fixing layer 2122 can be further improved and an internal sealing effect can be maximized.

The damping protrusion 2150 is formed to protrude toward the fixing layer 2122 from the inner wall of the mid-case 2110. The damping protrusion 2150 may be formed in an annular ring shape surrounding the inner wall of the mid-case 2110. In manufacturing, the damping protrusion 2150 may be fitted into the fixing layer 2122 in a pressurized manner. The damping protrusion 2150 may be fitted into a second fixing layer 2122-2. Of course, the damping protrusion 2150 may pass through the second fixing layer 2122-2 and be fitted into a first fixing layer 2122-1.

The damping protrusion 2150 is fitted into the fixing layer 2122 in a pressurized manner to compress the fixing layer 2122, thereby suppressing a movement of air inside the mid-case 2110 toward the cap 2200 and enabling internal tighter sealing.

Further, the damping protrusion 2150 is fitted into the fixing layer 2122 in a pressurized manner to compress the fixing layer 2122, thereby suppressing a vibration generated in a cartridge 2120 due to air flowing inside the humidification module 2100. That is, the damping protrusion 2150 can suppress a vibration of the cartridge 2120 in a Z-axis direction due to a flow (indicated by a Z-axis direction in FIG. 2) of dry air flowing into the inside through the port 2210 of the cap.

Further, since the damping protrusion 2150 is formed to protrude toward the fixing layer 2122 from the inner wall of the mid-case 2110, it is possible to easily position the fixing layer when the fixing layer is formed in a manufacturing process.

The cap 2200 according to the embodiment of the present invention may have a cap protrusion 2220 at a position corresponding to the end of the mid-case 2110 inserted into the groove of the packing member 2140, as illustrated in FIG. 2. The cap protrusion 2220 more effectively compresses the packing member 2140 together with the end of the mid-case 2110, thereby enabling external tighter sealing.

The packing member 2140 according to the embodiment of the present invention may come into contact with the fixing layer 2122, as illustrated in FIG. 2. A liquid resin (for example, a liquid polyurethane resin) used for formation of the fixing layer 2122 is cured in a state in which the liquid resin comes into contact with the packing member 2140, thereby improving adhesive strength between the packing member 2140 and the fixing layer 2122 and enhancing the inner sealing.

According to the embodiment of the present invention, as illustrated in FIG. 2, the fixing layer 2122 may include the first fixing layer 2122-1 in which the ends of the hollow fiber membranes 2121 are potted, and a second fixing layer 2122-2 that surrounds the first fixing layer 2122-1 and comes into contact with the bracket 2130.

Each of the first fixing layer 2122-1 and the second fixing layer 2122-2 may be formed by curing a liquid resin such as a liquid polyurethane resin through a deep casting scheme or a centrifugal casting scheme. The first fixing layer 2122-1 and the second fixing layer 2122-2 may be formed of different materials, but may be preferably formed of the same material (for example, a polyurethane resin) in terms of adhesive strength therebetween.

The humidification module 2100 may further include an inner case 2123 with both open ends within the mid-case 2110, as illustrated in FIG. 2. In this case, the hollow fiber membranes 2121 are disposed inside the inner case 2123. The first fixing layer 2122-1 in which the ends of the hollow fiber membranes 2121 are potted closes open ends of the inner case 2123.

According to the embodiment of the present invention, the inner case 2123 includes a plurality of holes H at positions corresponding to the ports 2111 (only one port is illustrated in FIG. 2) for a flow of an off-gas into or from the inside. An off-gas flowing into the mid-case 2110 through a first port 2111 passes through first holes H and then flows along the outer surfaces of the hollow fiber membranes 2121, thereby losing moisture. Subsequently, the off-gas exits the inner case 2133 through second holes H on the opposite side, and then, is discharged from the mid-case 2110 through a second port 2111.

The hollow fiber membranes 2121, the first fixing layer 2122-1, and the inner case 2123 constitute the hollow fiber membrane cartridge 2120.

As illustrated in FIG. 2, since the end of the inner case 2123 is potted in the first fixing layer 2122-1, relative positions of the hollow fiber membranes 2121 and the inner case 2123 can be maintained constant.

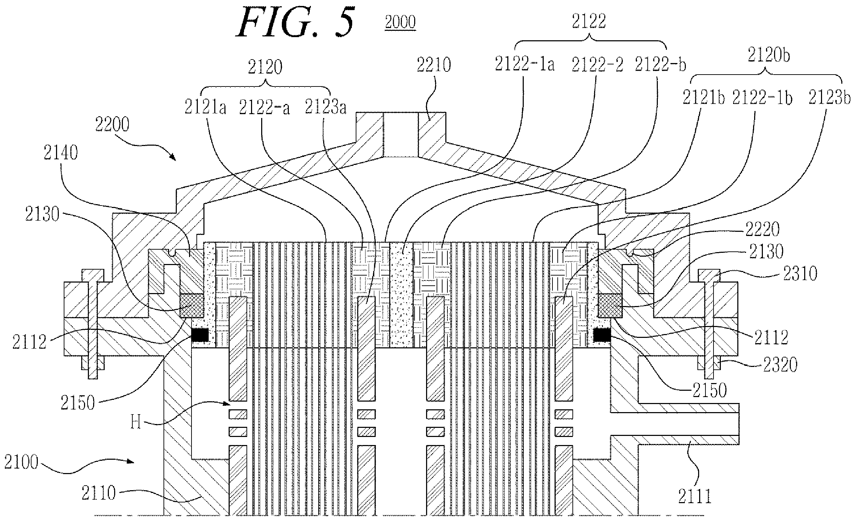

Hereinafter, a fuel cell membrane humidifier 2000 according to a second embodiment of the present invention will be described with reference to FIG. 5.

As illustrated in FIG. 5, the fuel cell membrane humidifier 2000 according to the second embodiment of the present invention is substantially the same as that in the first embodiment described above except that two hollow fiber membrane cartridges 2120a and 2120b are included.

That is, according to the second embodiment of the present invention, the hollow fiber membranes include a first group of hollow fiber membranes 2121a and a second group of hollow fiber membranes 2121b, a humidification module 2100 includes a first inner case 2123a in which the first group of hollow fiber membranes 2121a are disposed, and a second inner case 2123b in which the second group of hollow fiber membranes 2121b are disposed, and a fixing layer 2122 includes a first fixing layer 2122-1a in which ends of the first group of hollow fiber membranes 2121a are potted, a second fixing layer 2122-1b in which ends 2121b of the second group of hollow fiber membranes are potted, and a third fixing layer 2122-2 that surrounds the first and second fixing layers 2122-1a and 2122-1b and comes into contact with the bracket 2130.

The first group of hollow fiber membranes 2121a, the first fixing layer 2122-1a, and the first inner case 2123a constitute the first hollow fiber membrane cartridge 2120a, and the second group of hollow fiber membranes 2121b, the second fixing layer 2122-1b, and the second inner case 2123b constitute the second hollow fiber membrane cartridge 2120b.

As illustrated in FIG. 5, since the ends of the first and second inner cases 2123a and 2123b are potted in the first and second fixing layers 2122-1a and 2122-1b, respectively, relative positions of the first group of hollow fiber membranes 2121a and the first inner case 2123a and relative positions of the second group of hollow fiber membranes 2121b and the second inner case 2123b may be maintained constant.

For a larger humidification capacity, the number of hollow fiber membranes 2121 should be increased. However, in the case of the first embodiment in which only one hollow fiber membrane cartridge 2120 is included, there is a problem in that it is more difficult for the off-gas to be transferred to hollow fiber membranes 2121 located at a center when the number of hollow fiber membranes 2121 increases.

On the other hand, in the second embodiment of the present invention, since the two hollow fiber membrane cartridges 2120a and 2120b are spaced apart from each other, the off-gas can be relatively uniformly transferred to all of the hollow fiber membranes 2121a and 2121b even when a total number of hollow fiber membranes 2121a and 2121b increases. That is, when the numbers of hollow fiber membranes are equal, a structure of the second embodiment including the two hollow fiber membrane cartridges 2120a and 2120b is advantageous in terms of utilization of the hollow fiber membranes as compared to a structure of the first embodiment including only one hollow fiber membrane cartridge 2120.

The number of hollow fiber membrane cartridges mounted in the mid-case 2110 may be determined in consideration of a capacity of the fuel cell (or required humidification capacity), a size of the humidifier, and a weight of the humidifier as a whole.

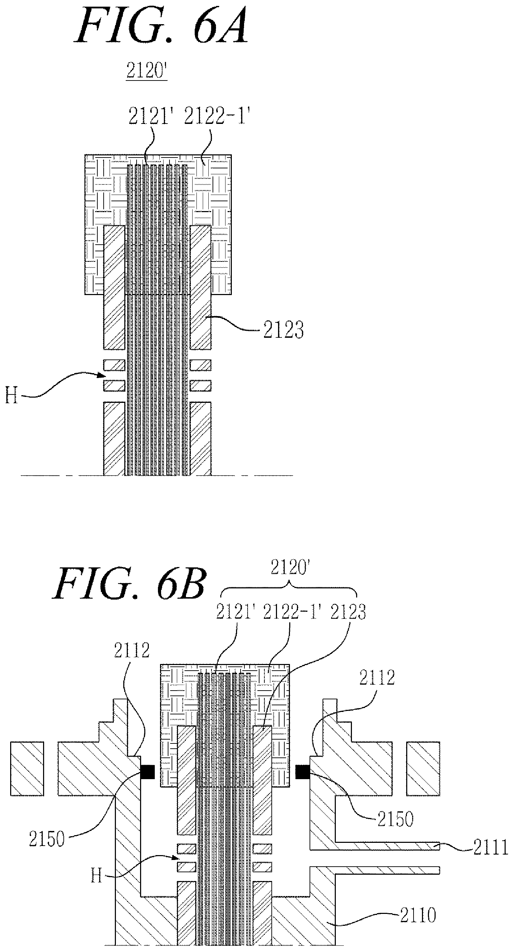

Hereinafter, a method of manufacturing the fuel cell membrane humidifier 2000 according to the embodiment of the present invention will be described in more detail with reference to FIGS. 6A to 6G.

First, a hollow fiber membrane cartridge 2120' in which ends of a plurality of hollow fiber membranes 2121' are potted in a first fixing layer 2122-1' is prepared, as illustrated in FIG. 6A.

The hollow fiber membrane cartridge 2120' may be manufactured by inserting at least some of the hollow fiber membranes 2121' into the inner case 2123 and then performing a deep casting process or a centrifugal casting process using a liquid resin such as a liquid polyurethane resin. The first fixing layer 2122-1' in which the ends of the hollow fiber membranes 2121' are potted is formed through curing of a liquid resin. When a deep casting process or a centrifugal casting process is performed, the ends of the inner case 2123 may be potted in the first fixing layer 2122-1' together with the ends of the hollow fiber membranes 2121'. The inner case 2123 may include first and second groups of holes H located on opposite sides in a longitudinal direction.

Subsequently, as illustrated in FIG. 6B, the hollow fiber membrane cartridge 2120' is inserted into the mid-case 2110, which includes both the open ends, and the step 2112 and the damping protrusion 2150 formed on the inner circumferential surface.

According to the embodiment of the present invention, the mid-case 2110 has open ends and has a cross section in a single closed curve form. The mid-case 2110 may have a partition wall that divides an inner space into an off-gas input space and an off-gas discharge space located on opposite sides in a longitudinal direction, and the hollow fiber membrane cartridge 2120' may be fitted into holes formed in the partition wall and supported by the partition wall. In this case, the first group of holes H of the inner case 2123 are present in the off-gas input ow space, and the second group of holes H of the inner case 2123 are present in the off-gas discharge space.

In this case, the off-gas entering the off-gas input space flows into the inner case 2123 through the first group of holes H, flows toward the second group of holes H inside the inner case 2123, moves to the off-gas discharge space through the second group of holes H, and then, is then discharged from the mid-is 2110.

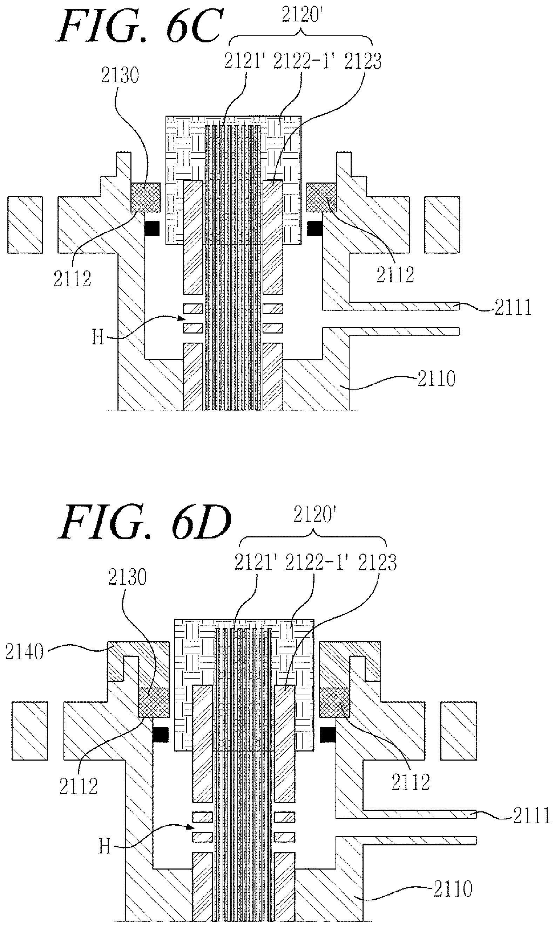

Subsequently, as illustrated in FIG. 6C, the bracket 2130 is mounted on the step 2112 of the mid-case 2110. As described above, the mid-case 2110 may have a cross section in a single closed curve form, and the bracket 2130 may have a single closed curve shape corresponding to the cross-sectional shape of the mid-case 2110.

The bracket 2130 according to the embodiment of the present invention may be formed of a metal, hard plastic (for example, polypropylene (PP), polyethylene terephthalate (PET), polystyrene (PS), polycarbonate (PC), or acrylic resin), or hard rubber. Optionally, the surface of the bracket 2130 may be treated with a primer, and then, the bracket 2130 may be mounted on the step 2112 of the mid-case 2110.

Subsequently, as illustrated in FIG. 6D, the packing member 2140 having the groove corresponding to the end of the mid-case 2110 is mounted on the end of the mid-case 2110 so that the end of the mid-case 2110 is fitted into the groove and the packing member 2140 partially comes into contact with the bracket 2130. The packing member 2140 may also have a single closed curve shape corresponding to the cross-sectional shape of the mid-case 2110.

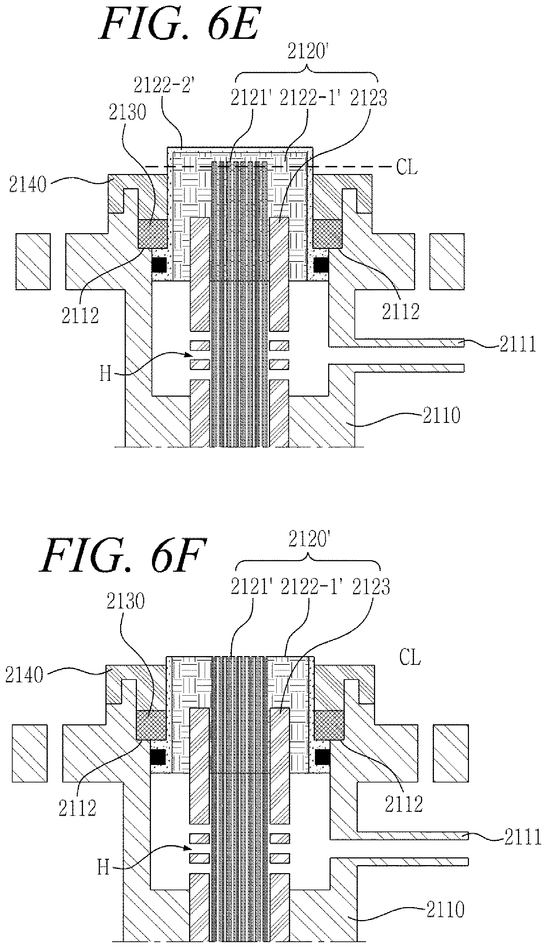

Subsequently, a second fixing layer 2122-2' with which a gap between the mid-case 2110, the bracket 2130, and the packing member 2140 and the ends of the hollow fiber membrane cartridges 2120' is filled is formed, as illustrated in FIG. 6E.

The second fixing layer 2122-2' may be made by fastening a potting cap (not illustrated) to the mid-case 2110, performing a deep casting process for injecting a liquid resin such as a liquid polyurethane resin into the potting cap in a state in which the potting cap is located under the mid-case 2110 and curing the liquid resin, and then removing the potting cap. Alternatively, the second fixing layer 2122-2' may be formed through a centrifugal casting process.

The first and second fixing layers 2122-1' and 2122-2' may be composed of different liquid resins, but may be preferably formed of the same material (for example, a liquid polyurethane resin) in terms of adhesive strength therebetween.

According to the embodiment of the present invention, the liquid resin (for example, the liquid polyurethane) used for formation of the second fixing layer 2122-2' is cured in a state in which the liquid resin is in contact with the bracket 2130 and the packing member 2140, thereby improving the adhesion of the second fixing layer 2122-2' to the bracket 2130 and the packing member 2140 and enhancing internal sealing.

According to the embodiment of the present invention, since the bracket 2130 is formed of a material having excellent adhesion to the second fixing layer 2122-2', it is possible to prevent a movement (that is, the internal leakage) of the gas through an interface therebetween and provide stronger inner sealing. Further, when the bracket 2130 whose surface is treated with a primer as described above is used, the adhesive strength between the bracket 2130 and the second fixing layer 2122-2' can be maximized so that more excellent internal sealing can be provided.

Subsequently, the first fixing layer 2122-1', the second fixing layer 2122-2', and the hollow fiber membranes 2121' are simultaneously cut along a cutting line CL of FIG. 6E, so that the hollow fiber membranes 2121 with open ends potted in the first fixing layer 2122-1 surrounded by the second fixing layer 2122-2 are obtained, as illustrated in FIG. 6F.

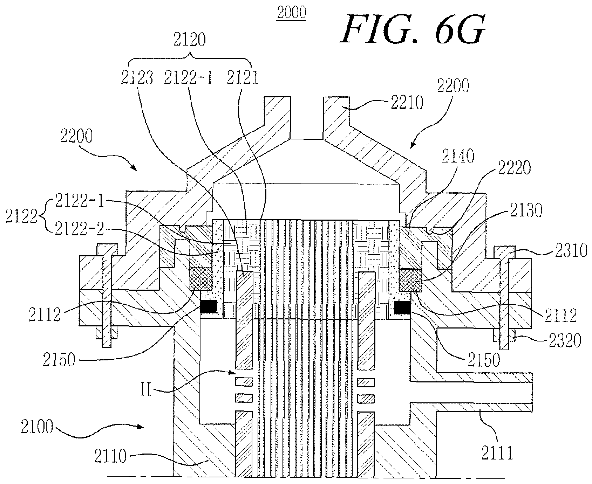

Subsequently, the cap 2200 is fastened to the mid-case 2110, and the cap 2200 is fastened so that the packing member 2140 is compressed by the cap 2200, as illustrated in FIG. 6G.

The cap 2200 according to the embodiment of the present invention may include the cap protrusion 2220 at a position corresponding to the end of the mid-case 2110 that is fitted into the groove of the packing member 2140, as illustrated in FIG. 6G. The cap protrusion 2220 more effectively compresses the packing member 2140 together with the end of the mid-case 2110, by enabling tighter external sealing.

Further, according to the embodiment of the present invention, since the bracket 2130 has a higher hardness than the packing member 2140, the packing member 2140 can be compressed when the cap 2200 is fastened to the mid-case 2110.

That is, since the bracket 2130 is not only supported by the step 2112 of the mid-case 2110, but also has a hardness (60 to 100 Shore A and, more preferably, 70 to 100 Shore A) higher than the hardness (30 to 60 Shore A and, more preferably, 40 to 50 Shore A) of the packing member 2140, the bracket 2130 can effectively apply pressure to the packing member 2140 together with the cap 2200 when the cap 2200 is fastened to the mid-case 2110 through the bolt 2310 and the nut 2320. As a result, a portion of the packing member 2140 disposed between the cap 2200 and the bracket 2130 (that is, located inside the mid-case 2110) is sufficiently compressed so that a movement (that is, the internal leakage) of a gas through an interface between the packing member 2140 and the bracket 2130 can be prevented and excellent internal sealing can be ensured.

According to the present invention described above, it is possible to effectively prevent both the external leakage and the internal leakage through only mechanical assembly of the bracket 2130 and the packing member 2140 without sealant applying and curing processes of the related art. Therefore, according to the present invention, since a sealant applying process and a sealant curing process required in the related art are omitted, not only workability is improved, but also productivity can be dramatically improved due to a shortened manufacturing time. Further, since a separate space for storing a semi-finished product is not required during the sealant curing process, a humidifier production cost can be reduced. Further, since the damping protrusion 2150 is formed between the mid-case 2110 and the fixing layer 2122, it is possible to suppress a vibration generated at the time of an operation, to suppress a flow of air inside the mid-case to the cap to enhance a sealing function, and to facilitate positioning of the fixing layer at the time of forming the fixing layer.

Although the embodiments of the present invention have been described above, those skilled in the art can variously modify or change the present invention through affixation, change, deletion, addition, or the like of components without departing from the spirit of the present invention described in the claims, and this will be said to be also included within the scope of the present invention.

### [Detailed Description of Main Elements]

2000: fuel cell membrane humidifier
2100 humidification module 2110 mid-case
2120: hollow fiber membrane cartridge 2121: hollow fiber membrane
2122: fixing layer 2130: bracket
2140: packing member 2150: damping protrusion

## Claims

1. A fuel cell membrane humidifier comprising:
a humidification module configured to humidify air supplied from the outside with moisture in an off-gas discharged from a fuel cell stack; and
caps coupled to both ends of the humidification module, respectively,
wherein the humidification module includes
a mid-case having both open ends and a step formed on an inner circumferential surface;
at least one cartridge disposed inside the mid-case and configured to accommodate a plurality of hollow fiber membranes;
a fixing layer having ends of the hollow fiber membranes potted therein, and supported by an inner wall of the mid-case;
a bracket supported by the step of the mid-case and being in contact with the fixing layer; and
a packing member including a groove having the end of the mid-case fitted thereinto and being in contact with the bracket, and
a damping protrusion fitted into the fixing layer to suppress a vibration generated in the cartridge using air flowing inside the humidification module is formed on the inner wall of the mid-case.

2. The fuel cell membrane humidifier of claim 1, wherein each of the bracket and the packing member has a single closed curve shape corresponding to a cross-sectional form of the mid-case.

3. The fuel cell membrane humidifier of claim 1, wherein the bracket has a higher hardness than the packing member.

4. The fuel cell membrane humidifier of claim 3, wherein the bracket has a hardness of 60 to 100 Shore A, and the packing member has a hardness of 40 to 50 Shore A.

5. The fuel cell membrane humidifier of claim 1,
wherein the packing member includes soft rubber, and
the bracket includes metal, hard plastic, or hard rubber.

6. The fuel cell membrane humidifier of claim 5,
wherein the packing member includes silicone rubber or urethane rubber, and
the bracket includes polypropylene (PP), polyethylene terephthalate (PET), polystyrene (PS), polycarbonate (PC), or acrylic resin.

7. The fuel cell membrane humidifier of claim 1, wherein the packing member is also in contact with the fixing layer.

8. The fuel cell membrane humidifier of claim 1, wherein the fixing layer includes
a first fixing layer having the ends of the hollow fiber membranes potted therein; and
a second fixing layer surrounding the first fixing layer and being in contact with the bracket.

9. The fuel cell membrane humidifier of claim 8, wherein the first fixing layer and the second fixing layer are formed of the same material.

10. The fuel cell membrane humidifier of claim 8, wherein both the first fixing layer and the second fixing layer include a polyurethane (PU) resin.

11. The fuel cell membrane humidifier of claim 8,
wherein the humidification module further includes an inner case having both open ends in the mid-case, and
the hollow fiber membranes are disposed in the inner case.

12. The fuel cell membrane humidifier of claim 11, wherein an end of the inner case is potted in the first fixing layer.

13. A fuel cell membrane humidifier comprising:
a humidification module configured to humidify air supplied from the outside with moisture in an off-gas discharged from a fuel cell stack; and
caps coupled to both ends of the humidification module,
wherein the humidification module includes
a mid-case having both open ends and a step formed on an inner circumferential surface;
at least one cartridge disposed inside the mid-case and configured to accommodate a plurality of hollow fiber membranes;
a fixing layer having ends of the hollow fiber membranes potted therein, and supported by an inner wall of the mid-case;
a bracket supported by the step of the mid-case and being in contact with the fixing layer; and
a packing member including a groove having the end of the mid-case fitted thereinto and being in contact with the bracket, and
a damping protrusion fitted into the fixing layer to suppress a vibration generated in the cartridge using air flowing inside the humidification module is formed on the inner wall of the mid-case,
the hollow fiber membranes include a first group of hollow fiber membranes and a second group of hollow fiber membranes,
the humidification module includes
a first inner case having the first group of hollow fiber membranes disposed therein; and
a second inner case having the second group of hollow fiber membranes disposed therein, and
the fixing layer includes
a first fixing layer having ends of the first group of hollow fiber membranes potted therein;
a second fixing layer having ends of the second group of hollow fiber membranes potted therein; and
a third fixing layer surrounding the first and second fixing layers and being in contact with the bracket.

14. The fuel cell membrane humidifier of claim 13,
wherein an end of the first inner case is potted in the first fixing layer, and
an end of the second inner case is potted in the second fixing layer.
